# FASCICULE DE BREVET EUROPEEN

(11) **EP 1 861 605 B1**
(45) Date de publication et mention de la délivrance du brevet: **31.05.2017**
(21) Numéro de dépôt: 06726114.9
(22) Date de dépôt: 21.03.2006
(51) Int. Cl.: F02D 41/00

(54) **PROCEDE D'OPTIMISATION DES PARAMETRES DE FONCTIONNEMENT D'UN MOTEUR A COMBUSTION**
VERFAHREN ZUR OPTIMIERUNG DER BETRIEBSPARAMETER EINES VERBRENNUNGSMOTORS
METHOD FOR OPTIMIZING OPERATING PARAMETERS OF A COMBUSTION ENGINE

(30) Priorité: 22.03.2005 FR 0502825
(43) Date de publication de la demande: 05.12.2007
(73) Titulaire: SP3H, 13100 Aix-en-Provence (FR)
(72) Inventeur: LUNATI, Alain, F-13580 La Fare les Oliviers (FR); FOURNEL, Johan, 84400 ROBION (FR)
(74) Mandataire: IP Trust
(86) Numéro de dépôt international: PCT/FR2006/000616
(87) Numéro de publication internationale: WO 2006/100377

(56) Documents cités:
- EP-A- 0 494 734
- WO-A-94/08226
- WO-A-99/02973
- FR-A- 2 632 409
- US-A- 5 229 946
- US-A- 5 262 645
- US-A- 5 349 189
- US-A- 5 515 280
- US-A- 5 712 797
- US-A1- 2004 000 275
- SCHERER M ET AL: "Fluid condition monitoring sensors for diesel engine control" SENSORS, 2004. PROCEEDINGS OF IEEE VIENNA, AUSTRIA OCT. 24 - 27, 2004, PISCATAWAY, NJ, USA,IEEE, 24 octobre 2004 (2004-10-24), pages 459-462, XP010793434 ISBN: 0-7803-8692-2

## Description

L'invention concerne un procédé d'optimisation du fonctionnement d'un moteur thermique piloté par un système de gestion électronique ou numérique.

Le système électronique ou numérique est un puissant micro-ordinateur qui coordonne la gestion globale du moteur. Le système électronique ou numérique contrôle, analyse et régule toutes les fonctions principales du moteur.

Le système électronique ou numérique est couplé à une série de capteurs et de détecteurs qui le renseigne en permanence sur l'état de marche du moment, en fonction d'un ensemble de paramètres comme par exemple la température du moteur, de l'huile, du liquide de refroidissement, du régime moteur et des paramètres extérieurs comme la pression atmosphérique et la température de l'air ambiant.

Le système électronique ou numérique compare ces valeurs instantanées avec les valeurs de consignes archivées dans la ou les cartographie(s) et calcule au moyen des modèles de réglages et des courbes caractéristiques prédéfinies les nouveaux points de consigne pour le cycle suivant. Il peut notamment faire varier la quantité de carburant injecté dans le moteur, le réglage de l'avance à l'allumage, la pression d'admission, le recyclage des gaz d'échappement ou bien encore le temps d'injection.

La cartographie est en fait constituée d'une base de données multidimensionnelle mémorisée et archivée dans une mémoire spécifique.

Les systèmes électroniques ou numériques connus jusqu'à présent ne prennent cependant pas en compte un paramètre fondamental permettant d'améliorer le fonctionnement du moteur, à savoir la qualité intrinsèque du carburant utilisé avec ce moteur.

Or il est connu que la qualité intrinsèque des carburants influe directement sur les performances, la consommation et les émissions polluantes et gaz à effet de serre des gaz d'échappement.

A.DOUAUD met en évidence dès 1983 pour les moteurs à allumage commandé, les liens entre la qualité de l'essence, les réglages du moteur et l'apparition du phénomène de cliquetis. JC GUIBET en 1987, dans l'ouvrage de référence Carburants et Moteurs met en évidence les interactions entre la qualité du carburant et le moteur et leur influence dans les modèles de paramétrages et de réglage de la combustion du moteur. Plus récemment, en 1997, dans une publication, A. GERINI analyse la sensibilité aux paramètres gazoles d'un moteur diesel d'automobile à injection directe. Enfin en 2003, N.HOCHART propose une modélisation des émissions de polluants des moteurs actuels essence, diesel pour véhicules légers ou poids lourds, en faisant varier la qualité des carburants en modifiant les bases de raffinage utilisées dans les mélanges.

En effet, à la pompe des stations services, la composition et la qualité des carburants, bien qu'elle soit définie par des normes, notamment les normes EN 590 et EN 228 pour l'Europe, varient dans le temps. La qualité fluctue en fonction des livraisons, des distributeurs, des saisons et des réglementations en vigueur. On estime ainsi que les propriétés physico-chimiques des carburants peuvent varier de 15 à 40% ou plus autour des valeurs moyennes définies par les normes.

Les mises au point sur bancs d'essais des réglages moteurs (cartographies et lois d'injection, de combustion et de post-traitement) sont effectuées sur une série de carburants normalisés.

Les motoristes utilisent pour ce faire les propriétés physicochimiques normalisées disponibles représentant les carburants telles que principalement :
- L'indice d'Octane Recherche et l'indice d'Octane Moteur pour les moteurs essence
- L'indice de Cétane pour les moteurs Diesel
- La courbe de distillation
- La pression ou tension de vapeur pour les moteurs essence
- Le point éclair pour les moteurs Diesel
- La tenue au froid (point de trouble, point d'écoulement et température limite de filtrabilité) pour les moteur Diesel
- La densité
- La teneur en composés oxygénés

Les motoristes s'accordent sur le fait que ces grandeurs ne sont pas suffisantes pour réaliser des réglages fins des moteurs du fait que ces grandeurs représentent les qualités du carburant mais ne prennent pas en compte l'adéquation « carburant-moteur ». Citons par exemple que les indices d'Octane recherche et moteur manquent de pertinence pour le réglage de la problématique « cliquetis ». Ces indices sont en effet mesurés sur un moteur normalisé mis au point il y à plus d'un demi siècle plus totalement adapté pour véhiculer les informations nécessaire au moteur du 21 siècle.

De plus, il est démontré que l'indice d'octane route du carburant est fonction :
- Du carburant utilisé
- Du moteur du véhicule
- Des conditions expérimentales (régime du moteur par exemple).

Il est prouvé dès 1971 (Williams G.R., LAGARDE F., et HORNBECK D.D., « étude des paramètres carburant affectant le cliquetis à haute vitesse des moteurs à combustion interne », Ingénieurs de l'Automobile, août-septembre 1971) qu'un même carburant testé sur différents véhicules voit son indice d'Octane route varié de plus de 12 points.

De même, en 1975, une étude sur le comportement de différents carburants sur un même moteur (Duval A., Guibet J.C., « Etude expérimentale du cliquetis à haut régime », Revue de l'Institut Français du Pétrole, mai-juin 1975) fait apparaître que l'effet du carburant sur ce même moteur influe sur l'indice d'Octane route de plus de 6 points.

Ainsi, du fait du manque de pertinence des propriétés physicochimiques et qualités, et la variabilité importante des carburants à la pompe, le couple carburant moteur ne peut actuellement pas être totalement optimisé.

Pour prendre en compte cette variation et pallier le manque de pertinence des informations qualitatives disponibles actuellement, les constructeurs sont obligés de faire de nombreuses concessions lors du développement des systèmes électroniques ou numériques afin de ne pas endommager le véhicule et d'avoir la plus faible consommation possible tout en étant conforme aux législations sur les gaz d'échappement.

C'est pourquoi les constructeurs prévoient une marge de sécurité importante pour compenser la plus ou moins bonne qualité des carburants et que le système électronique ou numérique de série proposé à l'achat du véhicule ne constitue qu'un compromis.

C'est pourquoi les modèles et cartographies préenregistrés sont généralement établies pour assurer une efficacité « assez bonne » sur toute la plage de fonctionnement du moteur et sont basés sur la composition et la qualité moyennes des carburants dans les pays regroupés en zones géographiques où sont vendus les véhicules.

Cependant, les normes anti-pollution sont de plus en plus sévères et les constructeurs automobile cherchent constamment à réduire les émissions réglementées dans les gaz d'échappement, comme le dioxyde de carbone, pour chaque véhicule vendu, sur l'ensemble de son cycle de vie, sans que cela se fasse au détriment de la performance du moteur. Il existe donc un besoin d'améliorer le contrôle moteur en prenant en considération la qualité intrinsèque du carburant présent dans le réservoir. Les paramètres qualitatifs à considérer doivent se distinguer des propriétés physicochimiques normalisées par une pertinence supérieure pour l'amélioration du contrôle moteur.

Le document FR-2 542 092, qui traite d'un procédé de détermination de la composition d'un mélange carburant alcool pour la régulation d'un moteur, se limite à l'analyse des carburants de type essence, de surcroît additivés en alcool et ne propose qu'une mesure quantitative et non qualitative, est restreint en ce qu'il détermine le pourcentage d'alcool dans le carburant.

Il en est de même pour les documents US-5 126 570, US-5 262 645 et US-5 239 860 dont les champs d'applications sont limités dans la description du procédé à une mesure quantitative d'une concentration en alcool dans un mélange essence-alcool par proche infrarouge.

Le document WO-94/08226 traite d'un procédé embarqué de détermination par spectroscopie proche infrarouge des propriétés du carburant. Ce document se limite aux propriétés physicochimiques normalisées, n'offrant qu'une pertinence limitée pour le contrôle moteur. De plus, l'utilisation de la spectroscopie proche infrarouge pour déterminer les qualités physicochimiques du carburant nécessite une étape de calibration de modèle. Cette calibration est cruciale pour la précision des prédictions ainsi que pour la robustesse des modèles. Depuis la fin des années 1970, de nombreux ouvrages de chimiométrie et de publications fournissent en effet la théorie de la spectroscopie proche infrarouge, des instruments et les méthodologies à mettre en oeuvre pour développer des modèles de corrélation et prédiction des propriétés des liquides à partir de leur spectres proche infrarouge, à partir de modèles mathématiques et statistiques. Cependant, les spécialistes en chimiométrie appliquée au proche infrarouge s'entendent sur le fait qu'un modèle n'est robuste et précis que sur une plage de variation restreinte dépendante du plan d'échantillonnage. Ainsi, il n'est pas envisageable de construire un modèle universel, suffisamment robuste et précis sur l'ensemble des carburants commerciaux d'un pays, d'un continent ou du monde entier, sur la base de la prédiction des propriétés physico-chimiques. Ce constat limite la portée du document WO-94/08226 dont le procédé d'invention serait difficilement applicable.

Même remarque concernant le document « Fluid condition Monitoring Sensors for Diesel Engine Control » dont les champs d'applications sont limités à une mesure quantitative d'une concentration en Esters (composés oxygénés) dans un mélange gazole-esters par spectroscopie.

Enfin, le document US2004/000275, qui traite d'un procédé embarqué pour mesurer la qualité du carburant pour améliorer le contrôle moteur, se limite aux propriétés physicochimiques normalisées, n'offrant qu'une pertinence limitée pour le contrôle du moteur. De plus, ce document ne décrit pas une méthode de mesure embarquée de ces dites propriétés réalisable.

L'invention vise à répondre au besoin de détermination de mesures qualitatives pertinente du carburant en adéquation avec le couple carburant-moteur, ceci en proposant un procédé d'optimisation du fonctionnement du moteur comprenant une étape d'analyse qualitative pertinente du carburant se basant sur l'analyse de la structure moléculaire des composants du carburant. Une telle analyse permet au système électronique ou numérique de régler au mieux et en temps réel, les paramètres, lois et cartographie d'injection de combustion et de post traitement du moteur en fonction des résultats mesurés.

A cet effet, l'invention concerne un procédé d'optimisation du fonctionnement d'un moteur thermique piloté par un système électronique ou numérique intégrant au moins un paramètre ou une loi ou une cartographie, pour l'injection, la combustion ou le post-traitement moteur, le procédé comportant une étape d'analyse de la composition du carburant à partir d'au moins un capteur implanté dans le circuit carburant du moteur comprenant le système de remplissage, le réservoir, les pompes, les filtres à carburant, et les circuits d'alimentation du moteur et un circuit retour vers le réservoir, et une étape de sélection ou de modification dudit paramètre, de ladite loi ou de ladite cartographie pour l'injection, la combustion ou le post-traitement en fonction du résultat de ladite analyse, l'étape d'analyse de la composition du carburant est une analyse embarquée dans un véhicule et comporte une étape de détermination de la structure moléculaire du carburant comprenant une étape d'analyse spectroscopique de la structure moléculaire des hydrocarbures composant le carburant par des mesures des spectres en proche infrarouge.

Un tel procédé permet d'obtenir une mesure universelle de la qualité du carburant par la détermination de sa structure moléculaire. Ainsi, on ne détermine pas une ou plusieurs des propriétés physico chimiques normalisées du carburant et on s'affranchit des problèmes inhérents à l'utilisation et à la modélisations des propriétés physicochimiques normalisées telles que les indices d'Octane, les indices de Cétane, la pression de vapeur, la courbe de distillation, la teneur en oxygénais.

Selon une réalisation particulière, l'analyse spectroscopique consiste en une analyse proche infrarouge du carburant.

En effet, le proche infrarouge est particulièrement bien adapté à l'analyse de la structure moléculaire dans le sens que le proche infrarouge est une méthode très sensible et que le spectre proche infrarouge peut être considéré comme " 1' ADN " du produit. La structure moléculaire extrait de ce spectre offre une grande richesse pour le contrôle moteur. De plus, le proche infrarouge est particulièrement répétable.

Il est possible de citer les ouvrages de référence pour le proche infrarouge comme celui de L. G. WEYER publié en 1985 ou le « Handbook of near infrared analysis » publié en 1992 ou des publications plus spécifiques comme les applications spectroscopiques en pétrochimie et raffinage comme présenté dans les articles de Jérôme WORKMAN Jr en 1996 ou de M. VALLEUR en 1999.

D'autres objets et avantages de l'invention apparaîtront au cours de la description qui suit, faite en référence aux dessins annexés.
La figure 1 est une représentation schématique d'un circuit d'alimentation en carburant d'un moteur thermique dans lequel le procédé selon l'invention est mis en oeuvre avec un premier mode de réalisation du capteur.
La figure 2 est une représentation schématique similaire à la figure 1 avec un deuxième mode de réalisation du capteur.
La figure 3 est un diagramme représentant les étapes du procédé et notamment les étapes d'analyse et de réglage du moteur.

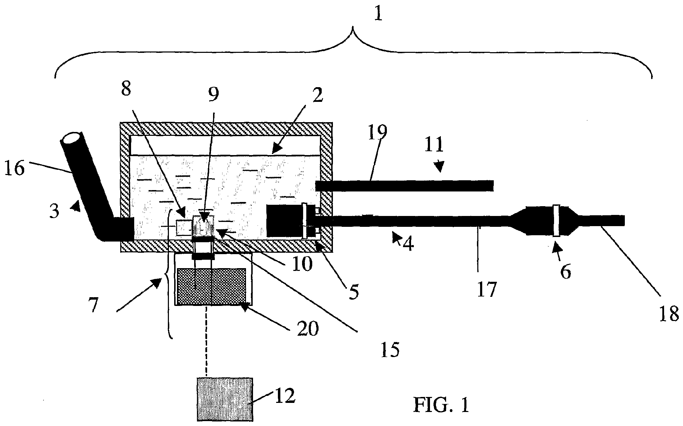

En référence à la figure 1, on décrit un procédé d'optimisation du fonctionnement d'un moteur thermique piloté par des paramètres, lois et cartographies d'injection, de combustion et de post-traitement moteur.

Le moteur à combustion est alimentée en carburant par le circuit d'alimentation 1, comprenant un réservoir 2, un système de remplissage du réservoir 3 et un circuit d'alimentation en carburant 4. Le circuit comprend par exemple une ou plusieurs pompes à carburant 5, un ou plusieurs filtres à carburant 6 et le circuit retour vers le réservoir 11. Le procédé selon l'invention est adapté pour tout type de carburants (gaz, gaz liquéfié, essence, kérosène, gazole, fiouls) répondant aux normes sur les carburants et biocarburants, additivés ou pas, dont les constituants majeurs sont le Carbone, l'Hydrogène et l'Oxygène.

Le procédé selon l'invention consiste à sélectionner ou modifier les paramètres, lois et/ou cartographies d'injection, de combustion et de post-traitement en fonction de la structure moléculaire du carburant. A cet effet, on procède à une analyse de la structure moléculaire du carburant alimentant le moteur au moyen d'une analyse spectroscopique des hydrocarbures composant le carburant. La détermination de cette structure consiste en une mesure des interactions entre un rayonnement électromagnétique et la matière constituant le carburant.

L'analyse spectroscopique consiste en une analyse proche infrarouge de la composition du carburant. Elle pourrait également consister en une analyse par moyen et/ou lointain Infrarouge, ou une analyse RMN ou une analyse par ultraviolet ou en plusieurs de ces analyses conduites simultanément selon le même principe.

L'analyse proche infrarouge est décrite ci-dessous :
Un capteur spectroscopique 7 est implanté dans le circuit d'alimentation 1 et est relié au système électronique ou numérique du moteur. Dans le cas d'une analyse proche infrarouge, le capteur 7 est constitué d'une source lumineuse 8, d'un système de séparation de lumière, d'une cellule d'échantillonnage du carburant 9, d'un système de détection photosensible 10 et d'un calculateur dédié 20. Le calculateur dédié 20 permet de piloter les séquences de mesure, de régler et de contrôler le bon fonctionnement du capteur 7. Le calculateur 20 peut contenir les modèles permettant d'effectuer la totalité des calculs associés au traitement du spectre proche infrarouge. Dans le cas du proche infrarouge, le capteur 7 peut comporter indifféremment une seule source et un seul détecteur ou plusieurs sources lumineuses et un seul détecteur. Il peut utiliser dans le cas du proche infrarouge dispersif ou non dispersif, un instrument comportant une source lumineuse infrarouge polychromatique ou des diodes émettrices infrarouge, des filtres à réseaux, interférentiels ou à cristal ou un système à transformée de fourier. Le capteur 7 est peut être à accès séquentiels ou multiplexés. Les modèles pourraient être hébergés dans un ou plusieurs calculateurs, existants ou dédiés.

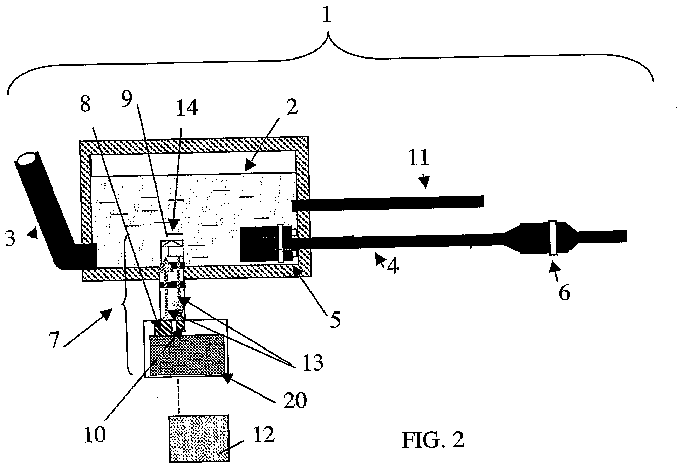

Selon une autre réalisation représentée sur la figure 2, l'utilisation de fibres optiques 13 et d'une sonde plongeante 14 adaptés est possible pour délocaliser le système d'échantillonnage des autres composants du spectromètre.

Le capteur 7 peut être un spectromètre proche infrarouge à barrette composées de plusieurs centaines de photodiodes à haute sensibilité qui enregistre chacune l'intensité lumineuse à une longueur d'onde donnée. Le détecteur qui compose le capteur 7 est un semi-conducteur à base de Silicium (Si) ou d'un alliage de type complexe (InGaAs, InAs, InSb, PbS, PbSe) à haute sensibilité. Le détecteur peut être refroidi ou non.

Le capteur 7 peut être placé dans le réservoir 2 (position 15 sur les figures 1 et 2), au niveau du système de remplissage du réservoir 3 (position 16 sur les figures 1 et 2), dans le circuit d'alimentation en carburant du moteur 4. Dans ce dernier cas, le capteur 7 peut être placé entre la pompe 5 et le filtre 6 (position 17) ou après le filtre 6 (position 18). Le capteur peut être également implanté dans le circuit retour 11 du carburant (position 19).

Le capteur 7 est agencé pour effectuer des mesures dans les régions spectrales comprises entre 780 et 2500 nanomètres (12820 cm⁻¹ à 4000 cm⁻¹). On peut par exemple prévoir des plages de mesure successives comprises entre 780 nanomètres et 1100 nanomètres (12820 cm⁻¹ à 9090 cm⁻¹), 1100 nanomètres et 2000 nanomètres (9090 cm⁻¹ à 5000 cm⁻¹) et 2000 nanomètres et 2500 nanomètres (5000 cm⁻¹ à 4000 cm⁻¹). A cet effet, le système d'échantillonnage est agencé pour présenter un trajet optique, c'est-à-dire une épaisseur de la cellule de mesure au travers de laquelle se fait la mesure, comprise entre 0,5 millimètres et 100 millimètres, c'est-à-dire des trajets optiques correspondant au plage de longueurs d'ondes de 10 millimètres à 100 millimètres dans le premier cas, de 1 millimètre à 20 millimètres dans le second cas et de 0.5 millimètres à 10 millimètres dans le dernier cas.

Le capteur 7 est agencé pour effectuer le spectre proche infrarouge du carburant circulant dans le circuit carburant d'alimentation 1 du moteur en reflectance, transmittance ou absorbance.

Le capteur 7 possède une résolution spectacle (précision) réglable de 1 cm⁻¹ à 20 cm⁻¹ préférentiellement à 4 cm⁻¹.

Le système optique et d'échantillonnage du capteur 7 peut être également autonettoyant ce qui permet d'éviter d'avoir à le démonter afin de le nettoyer.

La table adressée par le calculateur moteur au boîtier électronique, formant le système électronique ou numérique 12 gérant le fonctionnement du moteur, est une matrice à entrées multiples mettant en relation un marqueur indiciel de la structure moléculaire du carburant lié à l'impact de la présence des familles d'hydrocarbures pures qui ledit dit carburant et les paramètres, lois et cartographies de combustion, d'injection et de post-traitement du moteur.

Les familles d'hydrocarbures pures peuvent être regroupées par exemple en :
- hydrocarbures saturés (alcanes à chaînes carbonées ouvertes linéaires, ramifiés ou à chaînes carbonées fermées sur elles-mêmes) ;
- hydrocarbures insaturés (oléfines à chaîne ouvertes ou fermées contenant une ou plusieurs doubles liaisons) ;
- hydrocarbures aromatiques (un ou plusieurs cycles insaturés à noyau benzénique) ;
- produits organiques oxygénés : molécules contenant au moins un atome d'oxygène (alcools, aldéhydes, cétone, esters, éthers, acides...)

Les mesures des spectres en proche infrarouge du carburant sont faîtes par exemple en absorbance dans les zones de longueurs d'onde considérées. Les valeurs des absorbances mesurées à chaque longueur d'onde sélectionnée sont introduites dans des modèles mathématiques et statistiques universels préalablement calibrés sur une banque de données de référence, selon les règles connues de la chimiométrie pour renseigner la matrice à double entrée permettant de calculer les structures moléculaires.

Un exemple de table à deux entrées, adressée par le calculateur est représenté dans le tableau ci-dessous. La table est celle obtenue pour un carburant essence correspondant à la norme EN 228.

| Carburant EN 228 | Colonne (n) | A | B | C | D |
|---|---|---|---|---|---|
| Lignes (i) | Marqueurs indiciels/ pondération | gaz | légers | moyens | lourds |
| 1 | Marqueurs linéaires | 2.4 | 0.4 | 0 | 1.0 |
| 2 | Marqueurs branchés | 0 | 2.7 | 0 | 32.5 |
| 3 | Marqueurs insaturés | 0 | 5.3 | 0 | 0 |
| 4 | Marqueurs Aromatiques | | 0 | 25.6 | 6.9 |
| 5 | Marqueurs cycliques | | 0.3 | 0 | 5.5 |
| 6 | Marqueurs oxygénés | | 0 | 0 | 17.4 |

Le marqueur linéaire correspond à l'impact relatif à la présence de la famille des hydrocarbures saturés à chaînes carbonées linéaires ouvertes dans l'adéquation du couple carburant-moteur.

Le marqueur branché correspond à l'impact relatif de la présence de la famille des hydrocarbures saturés dans l'adéquation du couple carburant-moteur.

Le marqueur insaturé correspond à l'impact relatif de la présence de la famille des hydrocarbures insaturés à chaînes carbonées ouvertes comportant des branchements dans l'adéquation du couple carburant-moteur.

Le marqueur cyclique correspond à l'impact relatif de la présence de la famille des hydrocarbures saturés à chaînes carbonées fermées sur elles-mêmes dans l'adéquation du couple carburant-moteur.

Le marqueur aromatique correspond à l'impact relatif de la présence de la famille des hydrocarbures aromatiques dans l'adéquation du couple carburant-moteur.

Le marqueur oxygéné correspond à l'impact relatif de la présence des familles de produits organiques oxygénés dans l'adéquation du couple carburant-moteur.
Les quatre critères de pondérations Gaz, Légers, Moyens et Lourds sont calculés sur la base du nombre de carbones pondérés par une ou plusieurs des propriétés physiques comme par exemple les enthalpies de combustion ou vaporisation des produits purs composant le carburant.

Dans le cas du carburant essence EN 228 cité en exemple, la colonne GAZ regroupe les hydrocarbures dont le nombre de carbone ne dépasse pas 4 atomes.

La colonne LEGERS regroupe les hydrocarbures dont le nombre de carbone est compris entre 5 et 6 atomes.

La colonne MOYENS regroupe les hydrocarbures dont le nombre de carbone est compris entre 7 et 8 atomes.

La colonne LOURDS regroupe les hydrocarbures dont le nombre de carbone est supérieur ou égal à 9.

Grâce aux indices présents aux croisements des colonnes n et des lignes i, la structure moléculaire du carburant est donc connue d'une manière précise. Ces informations sont intégrées préalablement lors de mise au point du moteur et le système électronique ou numérique est adapté pour pouvoir utiliser ces informations afin d'optimiser les dans les paramètres, lois et cartographies d'injection, de combustion et de post traitement du moteur.

Sur le véhicule, lors de l'analyse embarquée de la structure moléculaire du carburant par le capteur 7, le système électronique ou numérique reçoit l'information mise à jour de la structure moléculaire du carburant présent dans le réservoir ce qui lui permet de sélectionner ou de modifier les réglages, lois et cartographies afin d'optimiser les réglage en fonction du carburant alimentant le moteur.

Les meilleurs paramétrages, lois et/ou cartographies d'injection, de combustion et de post traitement du moteur sont choisis par le système électronique ou numérique en fonction des informations usuelles relevées par les différents capteurs et détecteurs mais également par le capteur 7 qui le renseigne désormais sur la structure moléculaire du carburant.

Les paramétrages, lois et cartographie moteur peuvent être choisis pour optimiser la consommation de carburant et limiter les émissions dans les gaz d'échappement à iso performance du moteur ou pour augmenter les performances du moteur à iso consommation et émissions.

Une étape de stockage des informations de l'analyse de la structure moléculaire des carburant est utilisée de façon à former un historique de cette structure moléculaire.

Des modèles de paramétrage, lois et/ou cartographies d'injection, de combustion et de post traitement par défaut sont établis à partir de l'historique de la structure moléculaire du carburant.

Ainsi, en l'absence d'informations prélevées par le capteur 7, les paramètres, lois et/ou cartographies d'injection, de combustion et de post traitement du moteur sont choisis par défaut en fonction de l'historique de la structure moléculaire du carburant. Cet historique permet d'établir une moyenne mobile sur une ou plusieurs périodes de temps écoulé, de la structure moléculaire du carburant et les paramètres, lois et/ou cartographies par défaut sont choisis en fonction de la moyenne mobile la plus pertinente.

Les mesures peuvent être effectuées par le capteur 7 régulièrement dans le temps. Un détecteur du volume de carburant présent dans le réservoir 2 peut être également prévu. Le lancement de la prise de mesure peut être alors commandé pour se produire à chaque fois que le réservoir est rempli par l'automobiliste.

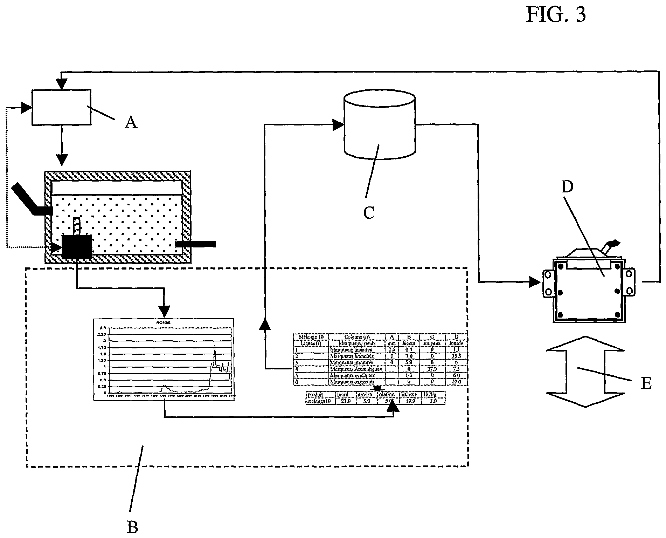

La figure 3 représente les différentes étapes du procédé :
- étape A : déclenchement de la prise de mesure ;
- étape B : étape d'analyse en fonction de la prise de mesure ;
- étape C : comparaison de la table obtenue avec la table de référence ;
- étape D : sélection ou modification des paramètres, lois et/ou cartographies adaptés ;
- étape E : réglage du moteur en fonction des paramètres, lois et/ou cartographies adaptés.

## Revendications

1. Procédé d'optimisation du fonctionnement d'un moteur thermique piloté par un système électronique ou numérique (12) intégrant au moins un paramètre ou une loi ou une cartographie, pour l'injection, la combustion ou le post-traitement moteur, le procédé comportant une étape d'analyse de la composition du carburant à partir d'au moins un capteur (7) implanté dans le circuit carburant du moteur (1) comprenant le système de remplissage (3), le réservoir (2), les pompes (5), les filtres à carburant (6), et les circuits d'alimentation du moteur (4) et un circuit retour (11) vers le réservoir, et une étape de sélection ou de modification dudit paramètre, de ladite loi ou de ladite cartographie pour l'injection, la combustion ou le post-traitement en fonction du résultat de ladite analyse,
- ledit procédé étant **caractérisé en ce que** l'étape d'analyse de la composition du carburant est une analyse embarquée dans un véhicule et comporte une étape de détermination de la structure moléculaire du carburant comprenant une étape d'analyse spectroscopique de la structure moléculaire des hydrocarbures composant le carburant par des mesures des spectres en proche infrarouge.

2. Procédé selon la revendication 1, **caractérisé en ce que** l'étape de mesure comprend une étape d'adressage d'au moins une table comprenant des valeurs de critères représentant la structure moléculaire du carburant, à destination du système électronique ou numérique (12) qui contrôle les paramètres, lois et cartographies d'injection, de combustion et de post-traitement du moteur.

3. Procédé selon la revendication 2, **caractérisé en ce que** la table est une matrice à entrées simple ou multiples mettant en relation un marqueur indiciel particulier de la structure moléculaire du carburant lié à la présence d'une famille d'hydrocarbures pure dans ledit carburant et les paramètres, lois et cartographies de combustion, d'injection et de post-traitement du moteur.

4. Procédé selon les revendications 1 à 3, **caractérisé en ce qu'**il prévoit d'utiliser un capteur spectroscopique (7) proche infrarouge.

5. Procédé selon la revendication 4, **caractérisé en ce que** le capteur proche infrarouge (7) est agencé pour effectuer des mesures dans les régions spectrales comprises entre 780 nm et 2500 nm.

6. Procédé selon la revendication 4 ou 5, **caractérisé en ce que** le capteur (7) est agencé pour présenter un trajet optique, c'est-à-dire une épaisseur de la cellule de mesure, comprise entre 0.5 mm et 100 mm.

7. Procédé selon l'une quelconques des revendications 4 à 6, caractérisé en ce le capteur (7) est agencé pour présenter une résolution spectrale, c'est-à-dire une précision de mesure allant de 1 cm⁻¹ à 20 cm⁻¹.

8. Procédé selon l'une quelconque des revendications 4 à 7, **caractérisé en ce qu'**il prévoit d'utiliser un capteur (7) réalisé à partir d'une source lumineuse (8), d'une cellule d'échantillonnage (9), d'un système de traitement optique de la lumière, d'un détecteur (10) et d'un calculateur (20).

9. Procédé selon l'une quelconque des revendications 4 à 7, **caractérisé en ce qu'**il prévoit d'utiliser un capteur (7) réalisé à partir d'une sonde plongeante (14) et de fibres optiques (13).

10. Procédé selon l'une quelconque des revendications 4 à 7, **caractérisé en ce qu'**il prévoit d'utiliser un capteur (7) réalisé au moyen d'un instrument comportant une pluralité de diodes émettrices infrarouge de bandes.

11. Procédé selon l'une quelconque des revendications 4 à 7, **caractérisé en ce qu'**il prévoit d'utiliser un capteur (7) réalisé au moyen d'un instrument comportant un détecteur composé de diodes photosensibles à haute sensibilité.

12. Procédé selon l'une quelconque des revendications 4 à 7, **caractérisé en ce qu'**il prévoit d'utiliser un capteur (7) réalisé au moyen d'un instrument comportant une source lumineuse infrarouge polychromatique.

13. Procédé selon l'une quelconque des revendications 4 à 7, **caractérisé en ce qu'**il prévoit d'utiliser un capteur (7) réalisé au moyen d'un instrument comportant un système sélection de longueurs d'onde.

14. Procédé selon l'une quelconque des revendications 4 à 7, **caractérisé en ce qu'**il prévoit d'utiliser un capteur (7) réalisé à partir d'au moins un instrument à Transformée de Fourier.

15. Procédé selon l'une quelconque des revendications 4 à 14, **caractérisé en ce que** le capteur (7) est autonettoyant.

16. Procédé selon l'une quelconque des revendications 4 à 15, **caractérisé en ce que** le capteur (7) est placé sur ou après le filtre à carburant (6).

17. Procédé selon l'une quelconque des revendications 4 à 15, **caractérisé en ce que** le capteur (7) est placé dans le système de remplissage du réservoir (3).

18. Procédé selon l'une quelconque des revendications 4 à 15, **caractérisé en ce que** le capteur (7) est placé dans le réservoir à carburant (2).

19. Procédé selon l'une quelconque des revendications 4 à 15, **caractérisé en ce que** le capteur (7) est placé dans le circuit retour (11).

20. Procédé selon l'une quelconque des revendications 1 à 19, **caractérisé en ce qu'**il comprend une étape de stockage des informations de la structure moléculaire du carburant de façon à former un historique de cette composition.

21. Procédé selon la revendication 20, **caractérisé en ce qu'**un modèle par défaut de cartographie, paramètres et lois d'injection, de combustion et de post-traitement du moteur sont établies à partir de l'historique de la structure moléculaire du carburant.

22. Procédé selon l'une quelconque des revendications 1 à 20, **caractérisé en ce que** le réglage des paramètres, lois et cartographie d'injection, de combustion et de post-traitement du moteur sont choisis pour optimiser la consommation de carburant et limiter les émissions dans les gaz d'échappement à iso performance du moteur ou pour augmenter les performances du moteur à iso consommation et émissions.

## Patentansprüche

1. Verfahren zur Optimierung des Betriebs eines Wärmemotors, der durch ein elektronisches oder digitales System (12), das mindestens einen Parameter oder ein Gesetz oder eine Kartographie zur Einspritzung, Verbrennung oder Nachbehandlung des Motors umfasst, gesteuert wird, wobei das Verfahren einen Schritt der Analyse der Zusammensetzung des Kraftstoffs mithilfe von mindestens einem Sensor (7) umfasst, der in das Kraftstoffsystem des Motors (1), welches das Befüllungssystem (3), den Tank (2), die Pumpen (5), die Kraftstofffilter (6), die Versorgungskreise des Motors (4) und einen Rücklauf (11) zum Tank umfasst, eingesetzt ist, sowie einen Schritt der Auswahl oder der Änderung des besagten Parameters, Gesetzes oder der besagten Kartographie für die Einspritzung, Verbrennung oder Nachbehandlung unter Berücksichtigung des Resultats der Analyse,
wobei besagtes Verfahren **dadurch gekennzeichnet ist, dass** der Schritt der Analyse der Zusammensetzung des Kraftstoffs eine Bordanalyse in einem Fahrzeug ist und einen Schritt bestehend aus der Bestimmung der Molekularstruktur des Kraftstoffs umfasst, der einen Schritt der spektroskopischen Analyse der Molekularstruktur der den Kraftstoff bildenden Kohlenwasserstoffe durch Messungen der Spektren im Infrarot-Nahfeld umfasst.

2. Verfahren nach Anspruch 1, **dadurch gekennzeichnet, dass** der Schritt der Messung einen Schritt enthält, in dem mindestens eine Tabelle mit Werten von Kriterien, welche die Molekularstruktur des Kraftstoffs darstellen, an das elektronische oder digitale System (12), das die Parameter, Gesetze und Kartographien zur Einspritzung, Verbrennung und Nachbehandlung des Motors steuert, adressiert wird.

3. Verfahren nach Anspruch 2, **dadurch gekennzeichnet, dass** die Tabelle eine Matrix mit einfachen oder vielfachen Eingängen ist, die einen speziellen Index-Marker der Molekularstruktur des Kraftstoffs im Zusammenhang mit der Präsenz eine Familie reiner Kohlenwasserstoffe in besagtem Kraftstoff mit den Parametern, Gesetzen und Kartographien zur Verbrennung, Einspritzung und Nachbehandlung des Motors in Beziehung stellt.

4. Verfahren nach den Ansprüchen 1 bis 3, **dadurch gekennzeichnet, dass** die Benutzung eines spektroskopischen Infrarot-Nahfeld-Sensors (7) vorgesehen ist.

5. Verfahren nach Anspruch 4, **dadurch gekennzeichnet, dass** der Infrarot-Nahfeld-Sensor (7) so angeordnet ist, dass er Messungen in den Spektralbereichen zwischen 780 nm und 2500 nm durchführt.

6. Verfahren nach Anspruch 4 oder 5, **dadurch gekennzeichnet, dass** der Sensor (7) so angeordnet ist, dass er einen optischen Weg, das heißt, eine Messzellendicke zwischen 0,5 mm und 100 mm aufweist.

7. Verfahren nach einem der Ansprüche 4 bis 6, **dadurch gekennzeichnet, dass** der Sensor (7) so angeordnet ist, dass er eine spektrale Auflösung, das heißt, eine Messpräzision zwischen cm⁻¹ bis 20 cm⁻¹ aufweist.

8. Verfahren nach einem der Ansprüche 4 bis 7, **dadurch gekennzeichnet, dass** darin die Benutzung eines Sensors (7) vorgesehen ist, der aus einer Lichtquelle (8), einer Abtastzelle (9), einem, optischen Lichtverarbeitungssystem, einem Detektor (10) und einem Rechner (20) hergestellt wird.

9. Verfahren nach einem der Ansprüche 4 bis 7, **dadurch gekennzeichnet, dass** darin die Benutzung eines Sensors (7) vorgesehen ist, der aus einer Tauchsonde (14) und Lichtleitfasern (13) hergestellt wird.

10. Verfahren nach einem der Ansprüche 4 bis 7, **dadurch gekennzeichnet, dass** darin die Benutzung eines Sensors (7) vorgesehen ist, der mittels eines Instrument hergestellt wird, das eine Vielzahl von Streifen mit Infrarotsendedioden umfasst.

11. Verfahren nach einem der Ansprüche 4 bis 7, **dadurch gekennzeichnet, dass** darin die Benutzung eines Sensors (7) vorgesehen ist, der mittels eines Instruments hergestellt wird, das einen Detektor bestehend aus hoch lichtempfindlichen Dioden umfasst.

12. Verfahren nach einem der Ansprüche 4 bis 7, **dadurch gekennzeichnet, dass** darin die Benutzung eines Sensors (7) vorgesehen ist, der mittels eines Instruments hergestellt wird, das eine polychromatische Infrarot-Lichtquelle umfasst.

13. Verfahren nach einem der Ansprüche 4 bis 7, **dadurch gekennzeichnet, dass** darin die Benutzung eines Sensors (7) vorgesehen ist, der mittels eines Instruments hergestellt wird, das ein System zur Auswahl von Wellenlängen umfasst.

14. Verfahren nach einem der Ansprüche 4 bis 7, **dadurch gekennzeichnet, dass** darin die Benutzung eines Sensors (7) vorgesehen ist, der aus mindestens einem Instrument mit Fourier-Transformation hergestellt ist.

15. Verfahren nach einem der Ansprüche 4 bis 14, **dadurch gekennzeichnet, dass** der Sensor (7) selbstreinigend ist.

16. Verfahren nach einem der Ansprüche 4 bis 15, **dadurch gekennzeichnet, dass** der Sensor (7) auf oder hinter dem Kraftstofffilter (6) platziert ist.

17. Verfahren nach einem der Ansprüche 4 bis 15, **dadurch gekennzeichnet, dass** der Sensor (7) im Tankbefüllungssystem (3) platziert ist.

18. Verfahren nach einem der Ansprüche 4 bis 15, **dadurch gekennzeichnet, dass** der Sensor (7) im Kraftstofftank (2) platziert ist.

19. Verfahren nach einem der Ansprüche 4 bis 15, **dadurch gekennzeichnet, dass** der Sensor (7) im Rücklaufkreis (11) platziert ist.

20. Verfahren nach einem der Ansprüche 1 bis 19, **dadurch gekennzeichnet, dass** es einen Schritt umfasst, in dem die Informationen der Molekularstruktur des Kraftstoffes gespeichert werden, so dass eine Historie dieser Zusammensetzung entsteht.

21. Verfahren nach Anspruch 20, **dadurch gekennzeichnet, dass** ausgehend von der Historie der Molekularstruktur des Kraftstoffes ein Standardmodell für Kartographie, Parameter und Gesetze zur Einspritzung, Verbrennung und Nachbehandlung des Motors erstellt wird.

22. Verfahren nach einem der Ansprüche 1 bis 20, **dadurch gekennzeichnet, dass** die Einstellung der Parameter, Gesetze und der Kartographie für die Einspritzung, Verbrennung und Nachbehandlung des Motors so ausgewählt werden, dass der Kraftstoffverbrauch optimiert und die Auspuffemissionen bei gleicher Leistung des Motors beschränkt oder die Leistungen des Motors bei gleichem Verbrauch und gleichen Emissionen gesteigert werden.

## Claims

1. A method for optimizing the operation of a heat engine controlled by an electronic or digital system (12) integrating at least one parameter or one law or one mapping, for the engine injection, combustion and post-treatment, with the method comprising a step of analyzing the composition of the fuel using at least one sensor (7) positioned in the fuel circuit of the engine (1) comprising the filling system (3), the tank (2), the pumps (5), the fuel filters (6) and the engine fuel feed system (4) and a return circuit (11) to the tank, and a step of selecting or modifying said parameter, said law or said mapping for the injection, the combustion or the post-treatment according to the result of said analysis,
- with said method being **characterized in that** the step of analyzing the fuel composition is an analysis on-board a vehicle and comprises a step of determining the molecular structure of the fuel comprising a step of spectroscopic analysis of the molecular structure of the hydrocarbons composing the fuel using near-infrared spectra measurements.

2. A method according to claim 2, **characterized in that** the measuring step comprises a step of addressing at least one table comprising criteria values representing the molecular structure of the fuel to the electronic or digital system (12) which controls the parameters, laws and mapping for the engine injection, combustion and post-treatment.

3. A method according to claim 2, **characterized in that** the table is a single- or multiple-entry matrix linking a particular index marker of the molecular structure of the fuel resulting from the presence of a pure hydrocarbon family in said fuel and the parameters, laws and mapping for the engine injection, combustion and post-treatment.

4. A method according to claims 1 to 3, **characterized in that** it provides to use a near-infrared spectroscopic sensor (7).

5. A method according to claim 4, **characterized in that** the near-infrared sensor (7) is so arranged as to perform measurements in the spectral regions between 780nm and 2,500nm.

6. A method according to claim 4 or 5, **characterized in that** the sensor (7) is so arranged as to have an optical path, i.e. a thickness of the measuring cell between 0.5mm and 100mm.

7. A method according to any one of claims 4 to 6, **characterized in that** the sensor (7) is so arranged as to have a spectral resolution, i.e. a measurement accuracy ranging from cm⁻¹ to 20cm⁻¹.

8. A method according to any one of claims 4 to 7, **characterized in that** it provides to use a sensor (7) consisting of a light source (8), a sampling cell (9), an optical light processing system, a detector (10) and a computer (20).

9. A method according to any one of claims 4 to 7, **characterized in that** it provides to use a sensor (7) consisting of a dipping probe (14) and optical fibers (13).

10. A method according to any one of claims 4 to 7, **characterized in that** it provides to use a sensor (7) consisting of an instrument having a plurality of band infrared light-emitting diodes.

11. A method according to any one of claims 4 to 7, **characterized in that** it provides to use a sensor (7) consisting of an instrument having a detector consisting of high sensitivity photosensitive diodes.

12. A method according to any one of claims 4 to 7, **characterized in that** it provides to use a sensor (7) consisting of an instrument comprising a polychromatic infrared light source.

13. A method according to any one of claims 4 to 7, **characterized in that** it provides to use a sensor (7) consisting of an instrument comprising a wavelength selecting system.

14. A method according to any one of claims 4 to 7, **characterized in that** it provides to use a sensor (7) consisting of at least one Fourier transform instrument.

15. A method according to any one of claims 4 to 14, **characterized in that** the sensor (7) is self-cleaning.

16. A method according to any one of claims 4 to 15, **characterized in that** the sensor (7) is positioned on or after the fuel filter (6).

17. A method according to any one of claims 4 to 15, **characterized in that** the sensor (7) is positioned in the tank filling system (3).

18. A method according to any one of claims 4 to 15, **characterized in that** the sensor (7) is positioned in the fuel tank (2).

19. A method according to any one of claims 4 to 15, **characterized in that** the sensor (7) is positioned in the return circuit (11).

20. A method according to any one of claims 1 to 19, **characterized in that** it comprises a step of storing information on the molecular structure of the fuel so as to have a history of such composition.

21. A method according to claim 20, **characterized in that** a default template of mapping, parameters and laws for the engine injection, combustion and post-treatment is determined from the history of the fuel molecular structure.

22. A method according to any one of claims 1 to 20, **characterized in that** the setting of the parameters, laws and mapping for the engine injection, combustion and post-treatment are so selected as to optimize the fuel consumption and to reduce emissions in the exhaust gases for a constant engine performance or to increase engine performance for constant consumption and emissions.
